Europäisches Patentamt

European Patent Office

Office européen des brevets

(19)

(11) Veröffentlichungsnummer: **0 434 867 A1**

## (12) EUROPÄISCHE PATENTANMELDUNG

(21) Anmeldenummer: 89203319.2

(22) Anmeldetag: 27.12.89

(51) Int. Cl.⁵: **B65G 65/44**

(43) Veröffentlichungstag der Anmeldung:
03.07.91 Patentblatt 91/27

(84) Benannte Vertragsstaaten:
AT BE CH DE ES FR GB GR IT LI LU NL SE

(71) Anmelder: BRABENDER TECHNOLOGIE KG
Kulturstrasse 55-73
W-4100 Duisburg 1(DE)

(72) Erfinder: **Vohwinkel, Horst**
Im Heidkamp 30
W-4000 Düsseldorf 31(DE)

(74) Vertreter: **Ackmann, Günther, Dr.-Ing.**
Claubergstrasse 24 Postfach 10 01 01
W-4100 Duisburg 1(DE)

(54) Schüttgutbehälter mit einer schwingenden Austragsvorrichtung.

(57) Beschrieben ist ein Schüttgutbehälter (1), der mit einer schwingenden Austragsvorrichtung (2), die aus einem etwa trichterförmigen, mit einem Unwuchtmotor (4) und einem Schwingteller (5) ausgerüsteten Bodenteil (3) besteht, das schwingbar unter Zwischenlage von Gummifedern (10) am Rand einer Bodenöffnung (11) des Schüttgutbehälters (1) befestigt ist. Zur Abdichtung zwischen dem fest stehenden Schüttgutbehälter (1) und der schwingenden Austragsvorrichtung (2) ist eine umlaufende elastische Manschette (13) angebracht. Damit diese gegen äußere mechanische Einwirkungen und Witterungseinflüsse geschützt ist, ist außen vor der Manschette (13) eine umlaufende Schutzabdeckung (16) angebracht. Die Schutzabdeckung (16) verhindert außerdem ein Auslaufen von Schüttgut im Falle eines Platzens der Manschette (13).

Fig. 1

## SCHÜTTGUTBEHÄLTER MIT EINER SCHWINGENDEN AUSTRAGSVORRICHTUNG

Die Erfindung betrifft einen Schüttgutbehälter mit einer schwingenden Austragsvorrichtung, die aus einem etwa trichterförmigen, mit einem Unwuchtmotor und einem Schwingteller ausgerüsteten Bodenteil besteht, das schwingbar unter Zwischenlage von Gummifedern am Rand einer Bodenöffnung des Schüttgutbehälters befestigt ist, wobei der zwischen dem Rand der Bodenöffnung und dem Bodenteil vorhandene Spalt durch eine umlaufende elastische Manschette abgedichtet ist.

Mit Hilfe der schwingenden Austragsvorrichtung läßt sich der Austrag des Schüttgutes wesentlich verbessern. Die am Schüttgutbehälter schwingbar befestigte Austragsvorrichtung bedingt jedoch eine Spalt zwischen beiden Bauteilen, die bisher durch eine Gummimanschette abgedichtet wird, welche mittels Spannbänder einerseits an dem ortsfesten Schüttgutbehälter und andererseits an der schwingenden Austragsvorrichtung befestigt ist. Die elastische Manschette besteht in der Regel aus Gummi und kann, da sie nach außen hin freiliegt, durch äußere Einwirkung oder Verwitterung beschädigt werden, so daß die Gefahr eines Austritts des Schüttgutes besteht.

Demgegenüber liegt der Erfindung die Aufgabe zugrunde einen Schüttgutbehälter der gattungsgemäßen Art derart auszubilden, daß eine mechanische Beschädigung der Manschette von außen her verhindert wird und bei einem Platzen der Manschette infolge eines Überdruckes das Schüttgut nicht unkontrolliert ausfließen kann.

Diese Aufgabe wird erfindungsgemäß dadurch gelöst, daß außen vor der Manschette eine umlaufende Schutzabdeckung angebracht ist.

Diese Schutzabdeckung hat den Vorteil, daß die empfindliche elastische Manschette vor einer äußeren mechanischen Beschädigung und Zerstörung geschützt ist. Außerdem wird die Manschette auch weitgehend vor nachteiligen Witterungseinflüssen geschützt. Weiterhin besteht der wesentliche Vorteil, daß die Schutzabdeckung, wenn es dennoch zu einem Platzen der Manschette kommt, das Schüttgut am Auslaufen hindert.

Vorzugsweise besteht die Schutzabdeckung aus Ringsegmenten, die am unteren Rand des Schüttgutbehälters lösbar befestigt sind. Die segmentartige Aufteilung der Schutzabdeckung ermöglicht eine einfache Anbringung, und die lösbare Befestigung erlaubt einen Austausch der Manschette.

Nach einem weiteren Merkmal der Erfindung hat die umlaufende Schutzabdeckung rechtwinklig nach innen umgebogene Ränder, die gegen rechtwinklig nach außen gerichtete Randschenkel der Manschette anliegen. Hierdurch wird eine Abdichtung zwischen der Schutzabdeckung und der Manschette sichergestellt, wobei die Schwingungen von dem elastischen Werkstoff der Manschette aufgenommen werden. Außerdem wird durch diese Ausbildung zwischen der Schutzabdeckung und der Manschette eine Art Ringkammer gebildet, welche infolge eines Platzens der Manschette eventuell austretendes Schüttgut auffängt. Um ein Ausfließen aus dieser Ringkammer zu verhindern, ist der untere Randschenkel der Manschette zweckmäßig mit einer Dichtungslippe versehen, die auf dem unteren Rand der Schutzabdeckung aufliegt.

Der Gegenstand der Erfindung ist in der Zeichnung in einem Ausführungsbeispiel dargestellt; es zeigt

Fig. 1 einen mittleren Längsschnitt durch einen mit einer schwingenden Austragsvorrichtung versehenen Schüttgutbehälter,

Fig. 2 die Austragsvorrichtung des Gegenstandes der Fig. 1 in einer Draufsicht und

Fig. 3 einen Ausschnitt des Gegenstand der Fig. 1 in einem größeren Maßstab.

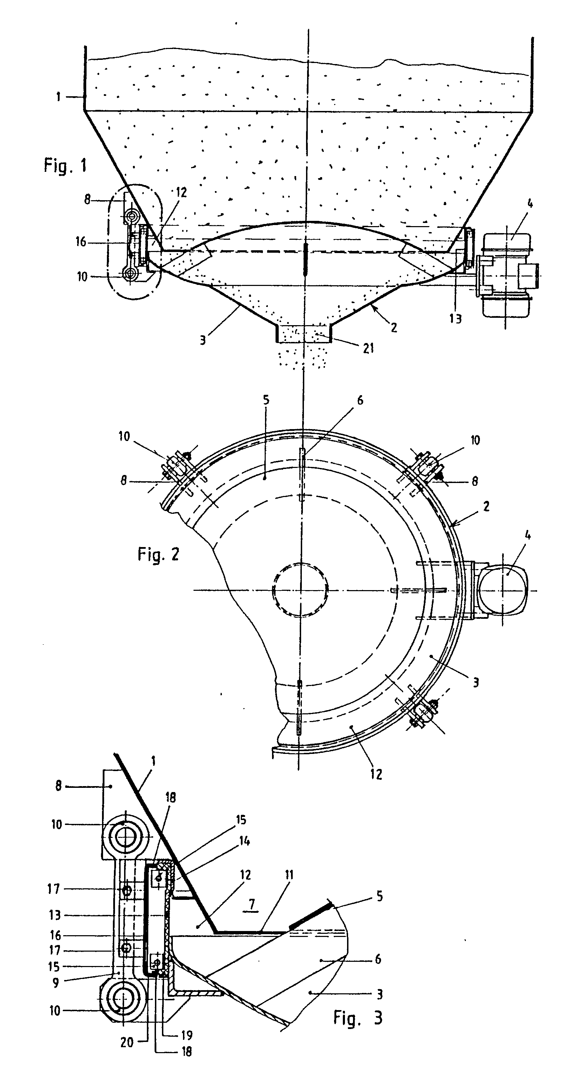

Wie die Fig. 1 zeigt, ist ein Schüttgutbehälter 1 mit einer schwingenden Austragsvorrichtung 2 versehen. Diese schwingende Austragsvorrichtung 2 besteht aus einem etwa trichterförmigen Bodenteil 3, das mit einem Auslaufstutzen 21 versehen ist. An dem Bodenteil 3 ist ein Unwuchtmotor 4 befestigt. Weiterhin ist auf dem Bodenteil 3 ein kalottenförmig ausgebildeter Schwingteller 5 an Tragarmen 6 befestigt. Dieser ist so ausgebildet, daß er die Schwingungen in die Schüttgutsäule überträgt und mit dem unteren Rand des Schüttgutbehälter innerhalb der Bodenöffnung 11 einen Spalt 7 bildet, durch den das Schüttgut in das trichterförmige Bodenteil 3 zum Auslaufstutzen 21 fließt. Das Bodenteil 3 ist schwingbar am Schüttgutbehälter 1 gelagert. Hierfür sind am Schüttgutbehälter 1 Lagerplatten 8 für Pendelarme 9 angebracht, an denen die gesamte schwingende Austragsvorrichtung 2 mittels Gummifedern 10 elastisch aufgehängt ist (vgl. auch Fig. 3).

Zwischen dem unteren Rand des Schüttgutbehälters 1 und dem Außenrand des Bodenteils 3 ist ein Spalt 12 vorhanden, der nach außen hin durch eine elastische Manschette, die vorzugsweise aus Gummi besteht, abgedichtet ist. Hierfür sind sowohl am Schüttgutbehälter 1 als auch am Bodenteil 3 Anlageringe 14 angebracht, gegen welche die Manschette 13 anliegt. Die Manschette 13 wird durch Spannbänder 15 an den Anlageringen 14 befestigt.

Zum Schutze der umlaufenden Manschette 13 ist eine Schutzabdeckung 16 vorgesehen, die aus einem schlagfesten Werkstoff, beispielsweise Blech, Kunststoff o. dgl. besteht. Die Schutzabdekkung 16 besteht vorzugsweise aus zwei oder mehreren Ringsegmenten, die z. B. mit Schrauben 17 lösbar am Schüttgutbehälter 1 befestigt sind. Wie Fig. 3 zeigt, sind die Ränder 18 der Schutzabdekkung 16 etwa rechtwinklig nach innen umgebogen, so daß diese gegen den betreffenden Rand der Manschette 13 zur Anlage kommen. Die Ränder der Manschette 13 sind mit entsprechenden nach außen weisenden Randschenkeln 19 versehen. Anstelle der Randschenkel 19 können auch Randwülste o. dgl. verwendet werden. Die Ränder 18 der Schutzabdeckung 16 werden gegen die Randschenkel 19 der Manschette 13 gedrückt und bewirken eine Abdichtung. Der untere Randschenkel 19 ist mit einer Dichtungslippe 20 versehen, die auf dem unteren Rand 18 der Schutzabdeckung 16 aufliegt.

**Ansprüche**

1. Schüttgutbehälter (1) mit einer schwingenden Austragsvorrichtung (2), bestehend aus einem etwa trichterförmigen, mit einem Unwuchtmotor (4) und einem Schwingteller (5) ausgerüsteten Bodenteil (3), das schwingbar unter Zwischenlage von Gummifedern (10) am Rand einer Bodenöffnung (11) des Schüttgutbehälter (1) befestigt ist, wobei der zwischen dem Rand der Bodenöffnung (11) und dem Bodenteil (3) vorhandene Spalt (12) durch eine umlaufende elastische Manschette (13) abgedichtet ist, dadurch gekennzeichnet, daß außen vor der Manschette (13) eine umlaufende Schutzabdekkung (16) angebracht ist.

2. Schüttgutbehälter nach Anspruch 1, dadurch gekennzeichnet, daß die Schutzabdeckung (16) aus Ringsegmenten besteht, die am unteren Rand des Schüttgutbehälters (1) lösbar befestigt sind.

3. Schüttgutbehälter nach Anspruch 1 oder 2, dadurch gekennzeichnet, daß die umlaufende Schutzabdeckung (16) rechtwinklig nach innen umgebogene Ränder (18) hat, die gegen rechtwinklig nach außen gerichtete Randschenkel (19) der Manschette (13) anliegen.

4. Schüttgutbehälter nach Anspruch 3, dadurch gekennzeichnet, daß der untere Randschenkel (19) der Manschette (13) mit einer Dichtungslippe (20) versehen ist, die auf dem unteren Rand (18) der Schutzabdeckung (16) aufliegt.

Fig. 1

Fig. 2

Fig. 3

**Europäisches Patentamt**

**EUROPÄISCHER RECHERCHENBERICHT**

Nummer der Anmeldung

EP 89 20 3319

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 658 992 (PELEUS)<br>* Spalte 2, Zeilen 5-7; Spalte 4, Zeilen 9-16; Figur 7 *<br>--- | 1,2,3,4 | B 65 G 65/44 |
| A | GB-A-2 078 209 (JADAL PROCESS EQUIPMENT)<br>* Seite 3, Zeilen 42-48; Figur 5 *<br>--- | 1 | |
| A | EP-A-0 128 973 (RICHARD WAHL)<br>* Zusammenfassung *<br>----- | 1 | |

| | RECHERCHIERTE SACHGEBIETE (Int. Cl.5) |
|---|---|
| | B 65 G<br>B 65 D |

Der vorliegende Recherchenbericht wurde für alle Patentansprüche erstellt

| Recherchenort | Abschlußdatum der Recherche | Prüfer |
|---|---|---|
| DEN HAAG | 24-08-1990 | VAN ROLLEGHEM F.M. |